# FASCICULE DE BREVET EUROPEEN

(11) **EP 2 769 140 B1**
(45) Date de publication et mention de la délivrance du brevet: **18.11.2015**
(21) Numéro de dépôt: 12780224.7
(22) Date de dépôt: 05.10.2012
(51) Int. Cl.: F17C 13/12, G01M 3/18, G01M 3/38, G03B 15/00, G03B 37/00

(54) **SUPPORT MOBILE POUR L'EXAMEN D'UNE PAROI**
MOBILER TRÄGER ZUR UNTERSUCHUNG EINER WAND
MOBILE SUPPORT FOR EXAMINATION OF A WALL

(30) Priorité: 21.10.2011 FR 1159578
(43) Date de publication de la demande: 27.08.2014
(73) Titulaire: GAZTRANSPORT ET TECHNIGAZ, 78470 Saint Rémy Lès Chevreuse (FR)
(72) Inventeur: CLEMONT, Romain, F-75014 Paris (FR); DELETRE, Bruno, F-78000 Versailles (FR); GLORY, Julien, F-92160 Antony (FR); HASSLER, David, 91940 Gometz-le-Châtel (FR)
(74) Mandataire: Loyer & Abello
(86) Numéro de dépôt international: PCT/FR2012/052267
(87) Numéro de publication internationale: WO 2013/057410

(56) Documents cités:
- DE-A1- 10 210 542
- JP-A- 60 081 599
- US-A1- 2009 103 909
- US-A1- 2009 207 250

## Description

On sait qu'il est important dans le domaine de la sécurité, d'assurer de façon pérenne le bon état des parois d'une cuve de transport de gaz naturel liquéfié de sorte qu'il est important de pouvoir inspecter régulièrement l'état des parois de telles cuves. On a constaté en effet que les membranes métalliques, qui délimitent l'intérieur de ces cuves, étaient susceptibles, après un certain temps d'utilisation, de présenter des déformations, des fissures ou des détériorations d'isolation, notamment dans les zones de plafond. Il est donc très souhaitable de pouvoir approcher, à très faible distance de la paroi à inspecter, un matériel d'inspection et dans l'état actuel de la technique, la méthode utilisée ne donne pas satisfaction.

Le document US2009/207250 A1 décrit un système de caméra aérienne. Le document US2009/103909 A1 décrit une structure de support pour caméra aérienne. Le document DE10210542 A1 décrit un support de caméra comprenant un ballon flottant gonflé au gaz et une caméra, contrôlé à distance et destiné à prendre des photographies dans des aires protégées du vent. Le document JP60081599 A décrit un dispositif de détection de fuite dans une cuve pour GNL.

On a déjà proposé, dans la demande de brevet Japonais 58-189296 déposée le 12 octobre 1983, d'utiliser un ballon flottant revêtu d'une enveloppe de protection ; une telle enveloppe porte extérieurement des détecteurs de gaz, qui constituent les matériels d'inspection de la paroi d'une cuve de transport de gaz naturels liquéfiés. Le ballon est retenu par des amarres fixées sur le plancher de la cuve. Toutefois, seuls les matériels d'inspection fixés sur la zone haute de l'enveloppe peuvent être positionnés au voisinage du plafond ; ceux qui sont sur les côtés de l'enveloppe ne peuvent jouer leur rôle que pour les parois inclinées des angles de cuve et à condition de se trouver dans un plan méridien du ballon perpendiculaire à la paroi à inspecter, ce qui implique de déplacer les amarres au sol pour positionner le ballon. En outre, il faut multiplier le nombre des matériels d'inspection portés par le ballon, ce qui implique qu'il faut augmenter la taille du ballon pour supporter l'augmentation de poids ; et enfin la zone d'angle de cuve au droit de laquelle se trouve le ballon, quand il est sensiblement tangent au plafond et à une paroi oblique, ne peut jamais être examinée. De plus, le positionnement se faisant manuellement par les opérateurs, celui-ci est relativement imprécis.

La présente invention a pour premier objet un support mobile selon la revendication 1 pour un instrument d'acquisition d'au moins une information portée par un élément examiné indépendant du support.

Selon un mode de réalisation, cette articulation comporte un cardan, de sorte que l'orientation de la nacelle principale soit maintenue constante par rapport à la direction verticale par la force motrice verticale.

Dans un mode préféré de réalisation, la force de retenue s'exerce sur la nacelle secondaire par au moins trois liens mécaniques souples raccordés chacun par l'une de ses extrémités à un plan de référence ; le support comporte des moteurs agencés dans le plan de référence et aptes à régler la longueur des liens mécaniques souples pour déplacer le support par rapport au plan de référence. Quand l'élément examiné est le plafond d'une cuve, le plan de référence peut être, par exemple, le plancher de la cuve.

Selon une première variante qui ne fait pas partie de l'invention, la force motrice verticale, qui s'exerce sur la nacelle primaire, est une force de pesanteur descendante, c'est-à-dire dirigée vers le bas, générée par la masse liée à la nacelle principale, la nacelle secondaire étant disposée au-dessus de la nacelle principale ; dans cette variante, la masse liée à la nacelle principale peut être celle de cette nacelle et des instruments qu'elle porte, mais elle peut également être augmentée d'une masse supplémentaire facilitant le maintien de l'orientation de la nacelle principale par rapport au plan de référence. Cette variante est tout particulièrement utile pour examiner et inspecter l'état d'un fond de fosse, la nacelle secondaire étant alors suspendue à ses liens mécaniques souples pour retenir l'ensemble du support au-dessus du fond de fosse à examiner.

Selon l'invention, la force motrice verticale, qui s'exerce sur la nacelle principale, est une poussée d'Archimède montante, c'est-à-dire dirigée vers le haut, générée par un corps creux lié à la nacelle principale, la nacelle secondaire étant disposée en dessous de la nacelle principale. Le corps creux peut être un ballon, dont la paroi est par exemple en polyuréthane ou autre, le gaz de remplissage du ballon étant de l'hélium. Un tel corps creux peut être sphérique ou cylindrique ou de toute autre forme adaptée. Selon un mode préféré de réalisation, le corps creux est lié à la nacelle principale par des amarres mécaniques souples, maintenues tendues par la poussée d'Archimède dirigée vers le haut. On peut avantageusement prévoir que le corps creux comporte une sphère et que les amarres mécaniques souples, qui lui sont associées, permettent une rotation limitée de la sphère par rapport à la nacelle principale en agissant sur la longueur desdites amarres, le centre de rotation étant le centre de la sphère.

On préfère que l'instrument d'acquisition d'au moins une information portée par l'élément examiné, soit chargé sur un plateau fixé sur la sphère associée à la nacelle principale, ledit plateau étant équilibré par un contre-plateau symétrique du plateau par rapport au centre de la sphère. Les amarres mécaniques souples peuvent être solidarisées, par une de leurs extrémités, avec la paroi de la sphère et, par leur autre extrémité, avec un dispositif de régulation agencé sur la nacelle principale et agissant sur leur longueur pour produire une rotation de la sphère selon un angle désiré. Le contre-plateau peut porter des batteries utilisées pour l'alimentation des moteurs des dispositifs de régulation et pour le contrôle de l'assiette de la nacelle principale. Le dispositif de régulation est avantageusement apte à produire une rotation de la sphère d'un angle compris entre 0° et au moins 90° dans au moins un plan méridien, de préférence dans tous les plans méridiens, de ladite sphère.

En variante, un câble d'alimentation électrique peut être prévu entre le sol et la nacelle pour assurer l'alimentation électrique des moteurs et autres appareils électriques embarqués.

La liaison entre la nacelle principale et la sphère peut être réalisée au moyen d'au moins deux, par exemple de quatre, amarres métalliques souples, dont les points d'attache sur la sphère sont disposés à 180° ou à 90° l'un de l'autre sur un même cercle de la sphère, dont le plan est distant du centre de la sphère, ledit cercle étant horizontal dans une position de référence de la sphère par rapport à la nacelle principale. Avantageusement, chaque amarre mécanique souple est associée à un élément de guidage, les au moins deux éléments de guidage étant portés par la paroi de la sphère et étant disposés à 180° ou à 90° l'un de l'autre sur un cercle équatorial de la sphère, qui est dans un plan parallèle au cercle où se trouvent les points d'attache des au moins deux amarres mécaniques souples sur la sphère ; chaque amarre mécanique souple, au voisinage de son élément de guidage associé, peut être recouverte d'une gaine évitant son frottement sur la sphère. Chaque élément de guidage peut comporter au moins une butée d'amortissement pour éviter de détériorer l'élément inspecté par le support lors de l'appui ou d'un choc du ballon contre ledit élément examiné.

Selon des modes de réalisation, l'articulation entre la nacelle principale et la nacelle secondaire comporte un degré de liberté de pivotement autour d'un axe vertical. Le support peut dans ce cas comporter un actionneur apte à entrainer un pivotement de la nacelle principale autour de l'axe vertical. Selon des modes de réalisation, cet actionneur comporte un moteur monté sur l'articulation ou un ventilateur monté sur le ballon.

Dans un mode préféré de réalisation, l'instrument d'acquisition d'au moins une information portée par l'élément examiné, comporte une caméra vidéo et/ou une caméra thermique et/ou un détecteur de gaz, par exemple d'hélium.

Un autre exemple d'instrument qui peut être monté sur le support mobile est un applicateur de film liquide, par exemple pour mettre en oeuvre un procédé de détection de fuite décrit dans FR-A-2952715.

Selon des modes de réalisation, le support mobile comporte en outre une nacelle d'instrumentation comprenant :
- une plateforme principale liée sous la nacelle secondaire par un filin,
- un treuil apte à régler la longueur du filin, permettant un mouvement vertical de la plateforme principale par rapport à la nacelle secondaire,
- un instrument d'acquisition d'information porté par la plateforme.

Selon des modes de réalisation, la nacelle d'instrumentation comprend en outre :
- une plateforme secondaire, et
- une deuxième articulation,
la plateforme secondaire étant liée au dessous de la plateforme principale par la deuxième articulation, l'instrument d'acquisition étant suspendu à la plateforme secondaire.

Selon des modes de réalisation, la plateforme secondaire comprend en outre un actionneur apte à agir sur l'instrument d'acquisition pour régler une orientation de l'instrument d'acquisition par rapport à la plateforme secondaire.

L'invention a pour second objet l'utilisation d'un support tel que ci-dessus défini pour l'examen et/ou l'inspection de l'état des parois d'une enceinte fermée ou d'une cuve ; la cuve examinée et/ou inspectée peut être une cuve de transport de gaz naturel liquéfié, dont la paroi comporte une membrane métallique primaire.

L'invention a enfin pour troisième objet l'utilisation d'un support pour lequel la force motrice verticale est une force de pesanteur descendante, pour l'inspection et/ou la surveillance de l'état des parois d'une fosse.

Une idée à base de l'invention est de proposer un support mobile porteur d'instrument(s) d'acquisition d'information, qui soit susceptible d'être déplacé par rapport à un élément examiné non solidaire du support, d'une part, en identifiant avec précision la position du point observé sur l'élément examiné et, d'autre part, en approchant le(s) instrument(s) suffisamment près de l'élément examiné pour permettre d'acquérir des informations impossibles à percevoir de loin. Certains aspects de l'invention partent de l'idée d'éviter tout risque de choc entre le support mobile utilisé et l'élément examiné, qui peut être fragile. Certains aspects de l'invention sont basés sur le fait que l'on sépare le support en deux parties, l'une qui est soumise à une force motrice verticale pour approcher l'élément examiné et qui porte l'instrument d'observation, l'autre qui assure le déplacement du support en vis-à-vis de l'élément examiné, et que l'on relie les deux parties par un cardan pour éviter une répercussion par réaction entre les mouvements imprimés à chacune des deux parties.

Pour mieux faire comprendre l'objet de l'invention, on va en décrire maintenant, à titre d'exemples purement illustratifs et non limitatifs, des modes de réalisation représentés sur les dessins annexés.

Sur ces dessins :
- la figure 1 est un schéma montrant la constitution d'un support selon la première variante, qui ne fait pas partie de l'invention utilisé pour l'inspection d'un fond de fosse ;
- les figures 2 à 9 montrent la constitution d'un support selon la deuxième variante, correspondant à un mode de réalisation de l'invention :

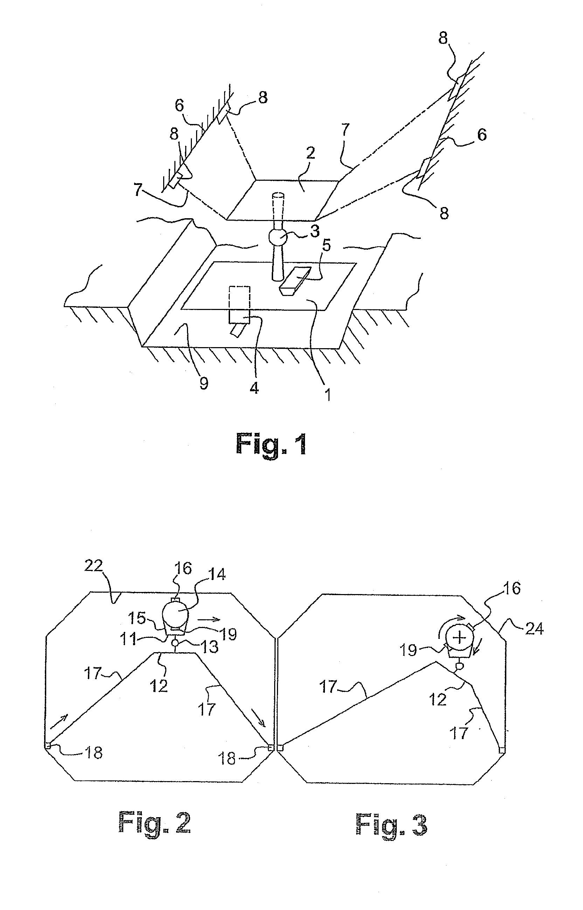

- la figure 2 représente schématiquement un support 1 selon la deuxième variante utilisée pour l'examen du plafond d'une cuve de transport de gaz naturel liquéfié ;
- la figure 3 représente la position des différents organes représentés sur la figure 2, lorsque l'examen du plafond s'effectue sur les panneaux obliques par lesquels le plafond se raccorde aux parois verticales de la cuve ;

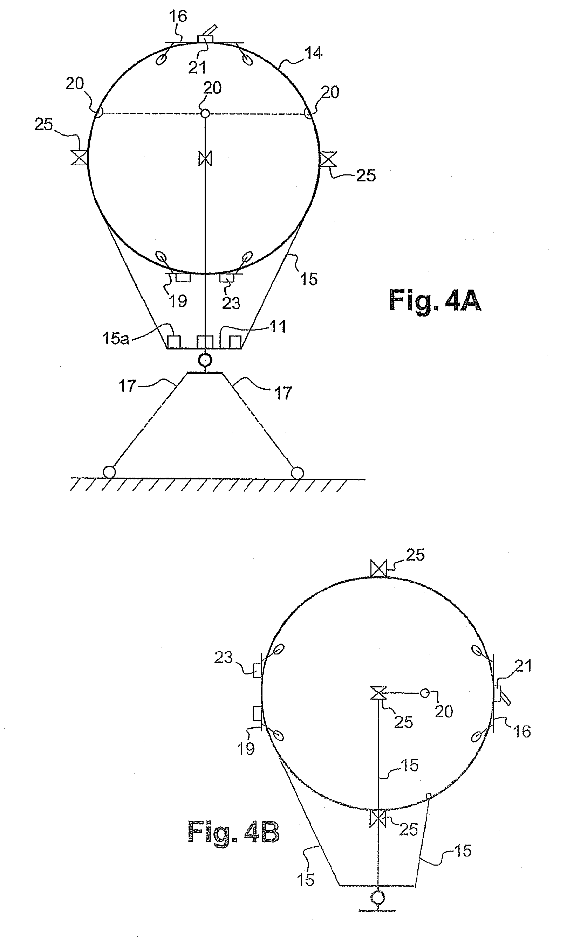

- la figure 4A représente, à plus grande échelle, le support utilisé pour la réalisation représentée sur les figures 2 et 3, ladite figure 4A montrant les différents organes dans la position correspondant à l'examen du plafond de cuve ;
- la figure 4B représente le dispositif de la figure 4A lorsque les différents organes occupent la position qui correspond à l'examen d'une paroi verticale de la cuve ;

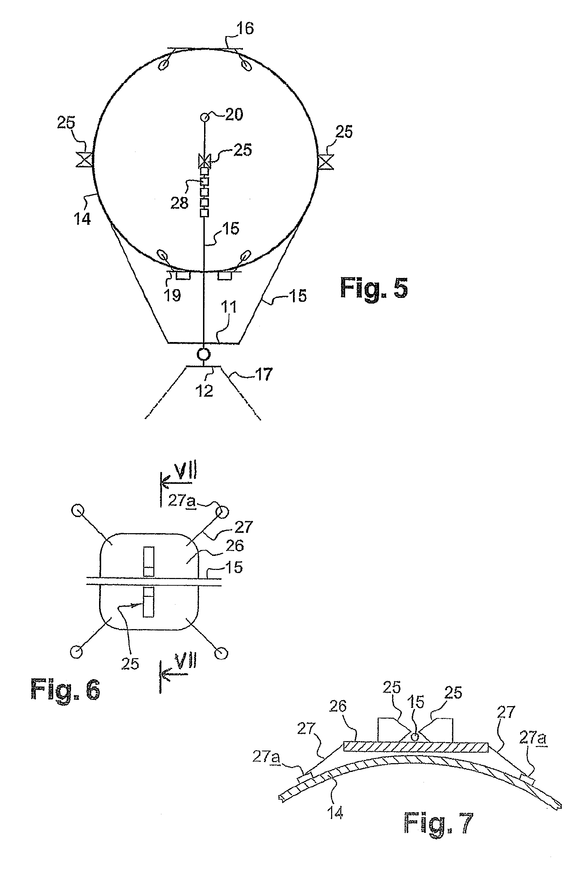

- la figure 5 représente le support de la figure 4A dont les amarres sont équipés, au voisinage de l'élément de guidage qui leur correspond, d'une gaine évitant le frottement de l'amarre sur la sphère à laquelle elle se raccorde ;
- la figure 6 représente schématiquement le mode de fixation des éléments de guidage sur la sphère qui les supporte ;
- la figure 7 représente schématiquement une coupe selon VII-VII de la figure 6 ;

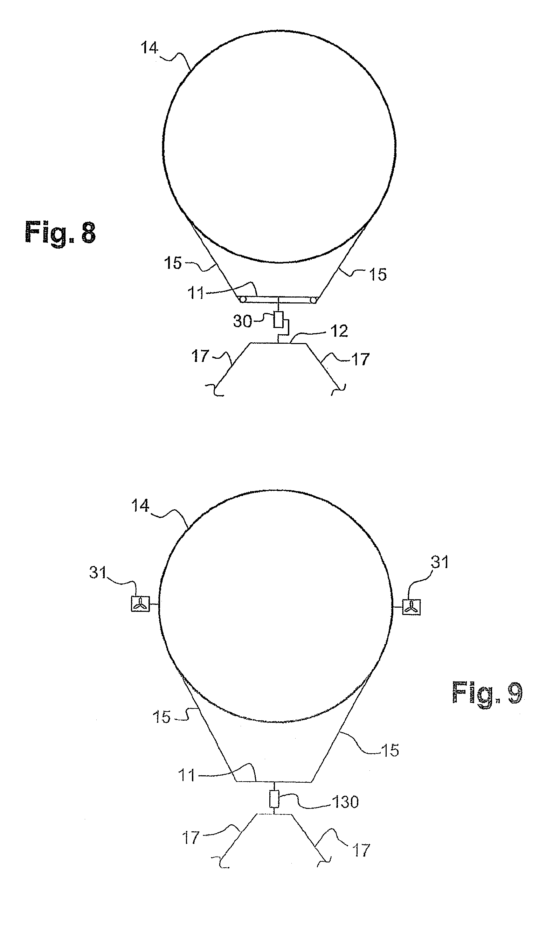

- la figure 8 représente schématiquement un deuxième mode de réalisation du support selon la deuxième variante;
- la figure 9 représente schématiquement un troisième mode de réalisation du support selon la deuxième variante.

En se référant à la figure 1, on voit que le support est constitué d'une nacelle principale 1 et d'une nacelle secondaire 2, les deux nacelles étant reliées entre elles par une articulation du type cardan, qui peut être réalisée, par exemple, par une rotule à doigt 3. La nacelle secondaire 2 est disposée au-dessus de la nacelle principale 1. La nacelle principale 1 porte sur sa face inférieure une caméra vidéo 4 et elle supporte une masse 5 placée sur sa face supérieure au voisinage du raccordement de la liaison entre les deux nacelles.

La nacelle secondaire 2 est reliée à un bâti 6 au moyen de quatre liens mécaniques souples 7 ; chaque lien souple 7 a une extrémité liée à la nacelle secondaire 2 et son autre extrémité liée à un moteur de treuil 8. En agissant sur les moteurs de treuils 8, il est possible de déplacer le support constitué par les deux nacelles parallèlement à un plan de référence, qui, dans l'exemple décrit, est le fond 9 d'une fosse.

On comprend donc que le support, qui vient d'être décrit, peut être déplacé par rapport au fond 9 en agissant sur la longueur des liens mécaniques souples 7 au moyen des treuils 8 ; de la sorte, la zone du fond 9, qui est observée par la caméra vidéo 4, peut être parfaitement identifiée et positionnée sur le fond ; l'effet de la masse totale de la nacelle principale 1 incluant la masse additionnelle 5 permet de maintenir l'orientation de cette nacelle 1 par rapport à la nacelle secondaire 2 et donc de maintenir, à la valeur désirée, la distance d'observation du fond 9.

Les figures 2 à 9 représentent la deuxième variante de réalisation dans laquelle le support mobile comporte une nacelle principale 11, qui est liée à une nacelle secondaire 12 par une liaison de type cardan réalisée au moyen d'une rotule à doigt 13. La nacelle principale 11 est disposée au-dessus de la nacelle secondaire 12 et elle est reliée par des amarres mécaniques souples 15 à un ballon sphérique désigné par 14 dans son ensemble. Le ballon 14 est constitué par une paroi en polyuréthane ; le gaz de remplissage du ballon est de l'hélium. Compte tenu des densités relatives de l'hélium et de l'air, le ballon 14 exerce sur la nacelle principale 11 une poussée d'Archimède dirigée verticalement vers le haut, poussée qui constitue une force motrice verticale à laquelle est soumise la nacelle principale 11. La nacelle secondaire 12 est retenue par quatre liens mécaniques souples 17, dont l'extrémité opposée à la nacelle se raccorde chacune à un moteur de treuil 18.

Le support mobile, qui vient d'être rapidement décrit, est destiné à être mis en place pour examiner les parois d'une cuve de transport de gaz naturel liquéfié et les treuils 18 sont fixés à la partie basse des parois verticales de la cuve. Le ballon sphérique 14 est équipé d'un plateau 16, qui est tangent à la sphère et maintenu sur elle par quatre attaches disposées aux angles du plateau et collées par leurs extrémités sur la paroi sphérique. Le ballon 14 comporte également un contre-plateau 19 symétrique du plateau 16 par rapport au centre du ballon sphérique 14, ce contre-plateau étant destiné à équilibrer le plateau 16 pour faciliter la rotation sur elle-même de la sphère 14 constitutive du ballon.

La liaison mécanique entre la sphère 14 et la nacelle principale 11 est effectuée grâce à quatre amarres 15, liées chacune par l'une de leurs extrémités à la nacelle principale 11 et par leur autre extrémité à la paroi de la sphère 14. Les points d'attache des amarres 15 sur la sphère 14 sont répartis tous les 90° sur un cercle de la sphère situé à une certaine distance du centre de ladite sphère ; on a désigné par 20 les points d'attache des amarres 15. Chaque amarre 15 est reliée par son extrémité, qui n'est pas solidaire de la paroi de la sphère 14, à un dispositif de régulation 15a agencé sur la nacelle principale 11 ; ce dispositif de régulation agit sur la longueur des amarres 15 pour produire une rotation de la sphère selon l'angle que l'on désire. Sur la figure 4A, on voit que le plateau 16, qui porte une caméra vidéo 21, se trouve à proximité du plafond 22 de la cuve où le support est opérationnel ; le contre-plateau 19 est lié à la paroi de la sphère 14 de la même façon que le plateau 16 et il porte les batteries 23, qui permettent le fonctionnement des dispositifs de régulation agissant sur la longueur des amarres 15.

Lorsque le cercle des points d'attache 20 est dans un plan parallèle au plafond de la cuve, les amarres sont dans la position représentée sur la figure 4A. En revanche, si l'on veut faire tourner la sphère 14 autour de son centre, comme représenté sur la figure 3, dans ce cas, on raccourcit une amarre et rallonge l'amarre diamétralement opposée, ce qui entraine une mise en place du plateau 16 en vis-à-vis du panneau oblique 24 de la cuve à examiner, qui relie le plafond de la cuve avec une paroi verticale. Cette possibilité de rotation de la sphère 14 permet de mettre les instruments portés par le plateau 16 en vis-à-vis de n'importe quel point de la paroi de la cuve, non seulement le plafond 22 et le panneau oblique 24, mais également les parois verticales de la cuve, comme cela est représenté sur la figure 4B.

Il est clair que, pour venir dans la position représentée sur la figure 4B, au moins une amarre 15 a changé de position par rapport à la paroi de la sphère 14. On a prévu, dans le plan équatorial de la sphère 14, des éléments de guidage désignés par 25 dans leur ensemble. Sur les figures 4A et 4B, on voit que le plan équatorial, où les éléments de guidage 25 sont répartis tous les 90°, a tourné de 90° autour d'un axe horizontal passant par le centre de la sphère 14. Le détail de la réalisation des éléments de guidage 25 est représenté sur les figures 6 et 7. Chaque élément de guidage est porté par une plaque 26, qui est fixée sur la paroi du ballon sphérique 14 ; chaque plaque 26 est fixée par quatre attaches 27, dont les extrémités 27a sont solidarisées de la paroi du ballon 14 ; ce type de fixation est le même que celui utilisé pour la fixation du plateau 16 et du contre-plateau 19. Chaque élément de guidage 25 est constitué de deux parties entre lesquelles l'amarre 15 peut coulisser librement tout en étant retenu au niveau de la plaque 26.

En se référant à la figure 5, on voit que les amarres 15, au voisinage des éléments de guidage 25, vont frotter sur la paroi sphérique du ballon 14 ; pour éviter une détérioration du matériel au cours de la rotation du ballon sphérique 14, on a prévu pour chaque amarre 15, au voisinage de son élément de guidage associé 25, une gaine 28 faisant office de roulement et évitant la détérioration de la paroi sphérique.

Dans les modes de réalisation des figures 8 et 9, les mêmes chiffres de référence désignent des éléments analogues ou identiques à ceux des figures 2 à 7.

Dans le mode de réalisation de la figure 8, l'articulation entre la nacelle principale 11 et la nacelle secondaire 12 présente seulement un degré de liberté en pivotement autour d'un axe vertical, obtenu au moyen d'une liaison pivot 30 qui remplace la rotule 13 précitée. Le pivot 30 peut être équipé d'un actionneur, par exemple un moteur électrique avec une roue crantée, permettant d'entrainer à volonté un pivotement relatif de la nacelle principale 11 liée au ballon 14 par rapport à la nacelle secondaire 12 retenue par les liens souples 17.

Dans le mode de réalisation de la figure 9, le pivot vertical 130 est un pivot passif sans motorisation. La rotation du ballon 14 et de la nacelle principale 11 est obtenue en actionnant des ventilateurs 31 fixés à la périphérie du ballon 14 de manière à créer une force tangentielle.

Grâce au degré de liberté du ballon 14 autour de l'axe vertical, il est possible de simplifier les degrés de liberté entre le ballon 14 et la nacelle principale 11. En particulier, il est suffisant de prévoir une inclinaison réglable du ballon dans un unique plan méridien, en actionnant seulement deux amarres 15 diamétralement opposées. Il est aussi possible de combiner tous les degrés de liberté mentionnés ci-dessus, par exemple pour permettre un pointage très précis d'un instrument de mesure hautement directionnel.

Dans le mode de réalisation de la figure 8, il est possible de prévoir également la rotule 13 entre les nacelles 11 et 12 pour maintenir l'assiette de la nacelle principale 11. Dans le mode de réalisation de la figure 9, la nacelle secondaire est constituée d'un anneau de petite dimension (non représenté) auquel sont liés les liens 17. Dans ce cas, la stabilité de la nacelle principale 11 résulte du fait que l'anneau servant de point d'attache des liens 17 n'exerce pas un moment de basculement substantiel en raison de sa petite dimension. En outre, le pivot vertical évite d'entremêler les liens.

Comme il a été antérieurement indiqué, le support mobile représenté sur les figures 2 à 9 permet un examen des parois d'une cuve de transport de gaz naturel liquéfié avec positionnement précis de chaque zone observée sur la paroi et quelle que soit la zone de paroi que l'on soumet à l'inspection. On peut notamment examiner les angles supérieurs de la cuve pour détecter, le cas échéant, des déformations localisées de la membrane métallique primaire de la cuve ou des fissures, même peu visibles car les instruments d'observation peuvent être amenés, de façon stable, très près de la paroi de la cuve.

Le pilotage du support mobile dans la cuve est effectué grâce à des moteurs contrôlant la longueur des liens 17. Ces moteurs sont au nombre de N, N désignant un nombre entier supérieur ou égal à 3, et sont disposés à des emplacements fixés dans la cuve, par exemple aux angles de la paroi de fond. Pendant le déplacement du support mobile, 3 moteurs sont pilotes (actifs) et N-3 moteurs sont suiveurs (passifs). Le plan de référence désigne dans ce cas le plan des 3 moteurs pilotes.

Etant donné que la position des N moteurs est connue, ces moteurs peuvent être pilotés par commande numérique, de manière préprogrammée, par exemple pour effectuer un balayage systématique ou suivre un chemin prédéterminé. Il est aussi possible de réaliser ce pilotage sous le contrôle manuel d'un opérateur et/ou d'influencer le pilotage en prenant en compte de manière dynamique des informations acquises pendant le déplacement, par exemple pour effectuer un suivi de profil par reconnaissance d'image, suivre un gradient de concentration mesuré, etc.

Les modes de réalisations représentés aux figures 2 à 9 permettent une inspection sur la partie haute de la cuve. Du fait du mode de fonctionnement du support mobile, certaines parties basses de la cuve peuvent rester inaccessibles à l'inspection. Ce problème est du au fait que les treuils 18 sont situés en dessous du ballon, à une distance telle que les efforts de maintien dans les câbles risquent de devenir trop élevés lorsque le ballon se rapproche du niveau des treuils 18. Cet effort lorsque le ballon est équidistant des quatre moteurs, est égal à F/(4*tan(alpha)), F étant la portance du ballon et alpha, l'angle fait par les câbles avec l'horizontale. Ainsi, avec les modes de réalisation précédents, la partie basse de la cuve peut être seulement inspectée manuellement par un ou plusieurs opérateurs.

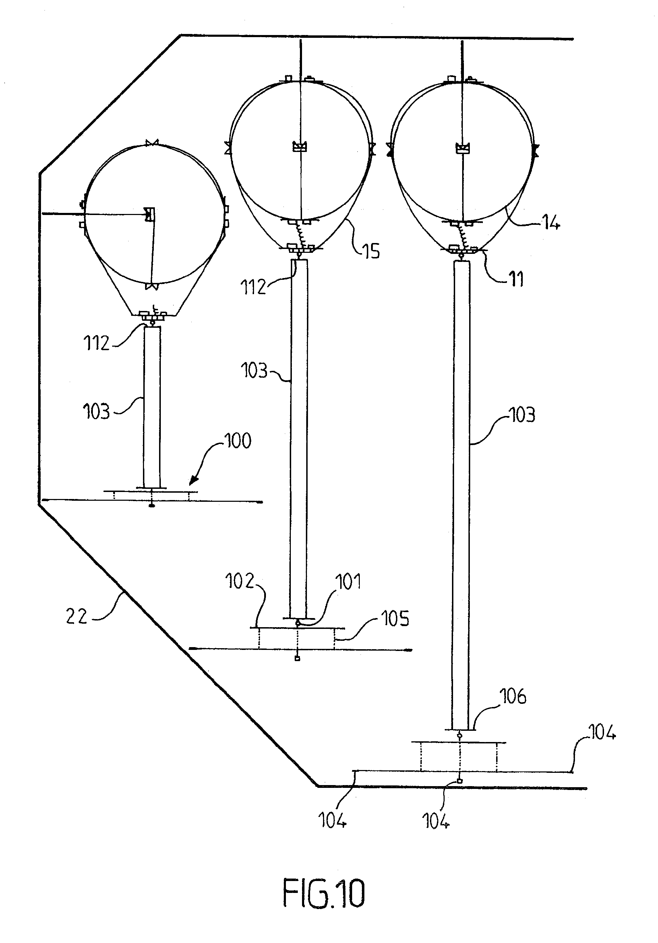

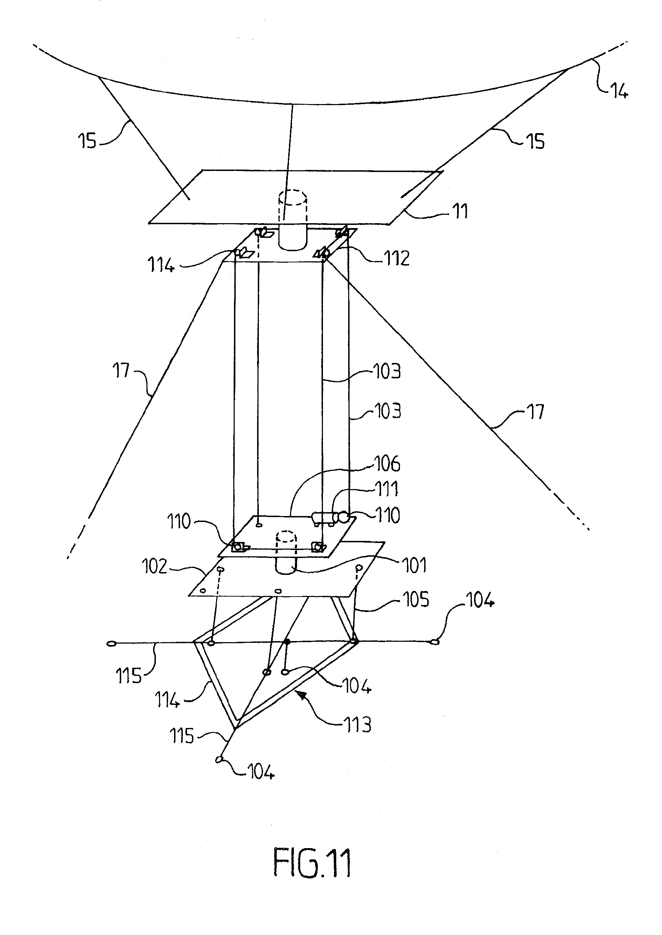

L'inspection automatique étant plus rapide et plus fiable qu'une inspection manuelle, une solution automatisée pour l'inspection du plancher de la cuve a un intérêt. Le mode de réalisation des figures 10 et 11 propose de rendre automatique l'inspection complète d'une cuve en partie haute et basse simultanément, tout en résolvant la limitation introduite par l'effort maximale encaissable par les poulies.

Dans le mode de réalisation des figures 10 et 11, les mêmes chiffres de référence désignent des éléments analogues ou identiques à ceux des figures 2 à 9.

En référence à la figure 10, le système d'inspection d'une cuve 22 en partie haute est enrichi d'un système d'inspection en partie basse.

Le principe est de suspendre une nacelle d'inspection référencée 100 dans son ensemble, à la nacelle secondaire 112. Cette nacelle secondaire 112 comprend les caractéristiques de la nacelle secondaire 12 auxquelles ont été ajoutées les caractéristiques liés à la suspension. Cette nacelle d'inspection 100 est destinée à réaliser l'inspection de la partie basse de la cuve. Cette nacelle d'inspection 100 peut embarquer des capteurs et instruments de mesures, au même titre que le ballon. La nacelle d'inspection 100, soumise aux effets de la gravité, est positionné à la verticale du ballon 14. La nacelle d'inspection 100 suit les déplacements dans l'espace horizontal de la cuve, du ballon 14. Par ailleurs, la nacelle d'inspection 100 est piloté selon l'axe vertical, indépendamment du pilotage du ballon 14.

La nacelle d'inspection 100 comprend une plateforme primaire 106, une plateforme secondaire 102 un cardan 101, des détecteurs de gaz 104. La nacelle d'inspection 100 comprend en outre des haubans 105.

La plateforme primaire 106 est maintenu à la verticale du ballon par un filin 103 souple, permettant d'ajuster la hauteur de la plateforme primaire 106 entre le ballon et le sol de la cuve 22. La plateforme secondaire 102 est relié au dessous de cette plateforme primaire 106, à l'aide d'une articulation du type cardan 101, qui peut être réalisée par exemple, par une rotule à doigt. La plateforme d'instrumentation est relié à la plateforme secondaire 102 (représentée sur la figure 11) par les haubans 105.

Cette disposition permet d'inspecter une partie basse comportant des plans horizontaux et des plans obliques.

Le cardan 101 permet de découpler la plateforme principale 106 de la plateforme secondaire 102, afin de garantir la stabilité de la plateforme secondaire 102. Ainsi les perturbations d'orientation éventuelles provoquées par les mouvements du ballon, propagées par le filin 103, ou ceux de la plateforme principale 106 sont amortis. Cela limite les mouvements parasites subis par les instruments pendant les mesures. De plus la plateforme secondaire 102 pèse de manière équilibrée sur la plateforme principale 106. Ce qui diminue les perturbations de la nacelle d'inspection 100 sur le ballon.

Le fonctionnement de la nacelle d'inspection 100 sera mieux compris avec l'étude de la figure 11. On y voit la nacelle d'inspection 100 suspendue à la nacelle secondaire 112 par le filin 103. La nacelle secondaire 112 comprend des poulies 114. Par ailleurs, la plateforme primaire 106 comprend des poulies 110 et un moteur 111. Comme dans les précédentes réalisations, le ballon est maintenu par des liens mécaniques souples 17 et la nacelle primaire 11 est arrimée au ballon 14 par les amarres 15.

Afin d'inspecter les chanfreins et murs verticaux d'une part et de tirer meilleur parti de cette solution d'autre part, la hauteur de la nacelle d'inspection 100 est maitrisée en réglant la longueur du filin 103 qui lie la plateforme primaire 106 à la nacelle secondaire 112 du ballon 14. En pilotant un moteur 111, la nacelle d'inspection 100, monte ou descend tout comme la cabine d'un ascenseur. Le moteur 111 mettant en mouvement un treuil agit sur la longueur du filin 103 qui passe dans les poulies 110 et 114. Ce mode de réalisation permet notamment de positionner correctement la nacelle d'inspection 100 en limitant la rotation de cette dernière autour de l'axe vertical d'une part mais aussi de son point de fixation d'autre part.

La plateforme d'instrumentation 113 comprend un cadre 114 et au bout de tringles 115 les détecteurs 104. Les détecteurs 104 sont positionnés dans le plan de la plateforme d'instrumentation 113, sur deux tringles 115 qui se croisent perpendiculairement. Un cinquième détecteur 104 est disposé à l'intersection des deux tringles orthogonalement au plan formé par les deux tringles 115, dans la direction opposée à celle du ballon 14.

Selon un mode de réalisation alternatif, la plateforme secondaire 102 comprend des moyens permettant de régler la longueur des quatre haubans 105 pour positionner la plateforme d'instrumentation 113 verticalement. Dans ce mode, les moyens de réglage permettent de positionner la plateforme d'instrumentation 113 au choix selon l'un des quatre points d'ancrage des quatre haubans 105. Ces moyens de réglages peuvent être par exemple des moteurs avec poulies. des vérins, ou autres.

Le mode de réalisation de la figure 10 présente l'avantage de pouvoir inspecter la partie basse des parois verticales, pendant que l'appareillage présent sur le ballon 14 effectue l'inspection de la partie haute.

Le support mobile descendant représenté à la figure 1 et le support mobile ascendant représenté à la figure 2 reposent sur des principes de fonctionnement similaires, leur différence étant principalement une inversion de sens dans la direction verticale. Des éléments qui ont été décrits en référence à l'un des deux cas sont aussi généralement applicables à l'autre cas.

Le support mobile peut être utilisé par ailleurs dans des domaines différents, par exemple pour la surveillance de la structure externe d'un pont ou d'un immeuble, l'inspection d'une verrière ou l'inspection d'un plafond de salle de spectacle. Selon la situation, un nombre plus ou moins élevé de liens et de moteurs peut être nécessaire. Par exemple, l'inspection d'une paroi verticale pourrait être réalisée avec seulement deux liens et deux moteurs positionnés en haut ou en bas de la paroi.

## Revendications

1. Support mobile pour un instrument d'acquisition d'information (21), ledit support comportant :
- une nacelle principale (11), qui est soumise à une force motrice verticale montante,
- un corps creux (14),
- des amarres mécaniques souples (15), le corps creux (14) étant lié à la nacelle principale (11) par les amarres mécaniques souples (15), la force motrice verticale montante étant une poussée d'Archimède générée par le corps creux (14), les amarres mécaniques souples (15) étant maintenues tendues par ladite poussée d'Archimède,
- une nacelle secondaire (12, 112), la nacelle secondaire (12, 112) étant disposée en dessous de la nacelle principale (11),
- une pluralité de liens mécaniques souples (17) pour exercer une force de retenue maintenant le support en équilibre à l'encontre de la force motrice verticale, les longueurs des liens mécaniques souples étant modifiables pour provoquer un déplacement du support dans un volume de travail, et
- une articulation (13) liant la nacelle principale (11) à la nacelle secondaire (12, 112),
**caractérisé en ce que** les liens mécaniques souples (17) sont liés à la nacelle secondaire et **en ce que** les amarres mécaniques souples (15) permettent une rotation limitée du corps creux (14) par rapport à la nacelle principale (11) par action sur la longueur desdites amarres (15), le centre de ladite rotation étant le centre du corps creux (14).

2. Support selon la revendication 1, **caractérisé en ce que** l'articulation (13) comporte un cardan pour que l'orientation de la nacelle principale soit maintenue constante par rapport à la direction verticale par la force motrice verticale.

3. Support selon l'une des revendications 1 ou 2, **caractérisé en ce que** l'articulation entre la nacelle principale (11) et la nacelle secondaire (12) comporte un degré de liberté de pivotement autour d'un axe vertical.

4. Support selon la revendication 3, **caractérisé en ce qu'**il comporte un actionneur apte à entrainer un pivotement de la nacelle principale autour de l'axe vertical.

5. Support selon l'une des revendications 1 à 4, **caractérisé en ce que** la force de retenue s'exerce sur la nacelle secondaire (12) par au moins trois liens mécaniques souples (17) raccordés chacun par une de ses extrémités à un plan de référence.

6. Support selon la revendication 5, **caractérisé en ce qu'**il comporte des moteurs (18) agencés dans le plan de référence et aptes à régler la longueur des liens mécaniques souples (17) pour déplacer le support par rapport au plan de référence.

7. Support selon l'une des revendications 1 à 6, **caractérisé en ce que** le corps creux (14) est un ballon, dont le gaz de remplissage est l'hélium.

8. Support selon l'une des revendications 1 à 7, **caractérisé en ce que** l'instrument d'acquisition d'information (21) est chargé sur un plateau (16) fixé sur le corps creux (14) associé à la nacelle principale (11), ledit plateau (16) étant équilibré par un contre-plateau (19) symétrique du plateau (16) par rapport au centre du corps creux (14).

9. Support selon l'une des revendications 1 à 8, **caractérisé en ce que** les amarres mécaniques souples (15) sont solidarisées, par une de leurs extrémités, avec la paroi du corps creux (14) et, par leur autre extrémité, avec un dispositif de régulation (15a) agencé sur la nacelle principale (11) et agissant sur leur longueur pour produire une rotation du corps creux(14) selon un angle désiré.

10. Support selon la revendication 9, **caractérisé en ce que** le dispositif de régulation (15a) est apte à produire une rotation du corps creux (14) d'un angle compris entre 0° et au moins 90° dans au moins un plan méridien de la sphère.

11. Support selon l'une des revendications 1 à 10, **caractérisé en ce que** la liaison entre la nacelle principale (11) et le corps creux (14) est réalisée au moyen d'au moins deux amarres mécaniques souples (15), dont les points d'attache (20) sur le corps creux (14) sont disposés à 180° l'un de l'autre sur un même cercle du corps creux (14), dont le plan est distant du centre dudit corps creux (14), ledit cercle étant horizontal dans une position de référence du corps creux (14) par rapport à la nacelle principale (11).

12. Support selon la revendication 11, **caractérisé en ce que** chaque amarre mécanique souple (15) est associée à un élément de guidage (25), les éléments de guidage étant portés par la paroi du corps creux (14) et étant disposés sur un cercle équatorial dudit corps creux, qui est dans un plan parallèle au cercle où se trouvent les points d'attache (20) des au moins deux amarres mécaniques souples (15) sur le corps creux (14).

13. Support selon la revendication 12, **caractérisé en ce que** chaque amarre mécanique souple (15), au voisinage de son élément de guidage (25) associé, est recouverte d'une gaine (28) évitant le frottement de l'amarre (15) sur le corps creux (14).

14. Support selon l'une des revendications 12 ou 13, **caractérisé en ce que** chaque élément de guidage (25) comporte au moins une butée d'amortissement pour éviter de détériorer l'élément inspecté par le support lors de l'appui ou d'un choc du corps creux (14) contre ledit élément examiné.

15. Support selon l'une des revendications 1 à 14, comportant en outre une nacelle d'instrumentation comprenant :
- une plateforme principale (106) liée sous la nacelle secondaire (112) par un filin (103),
- un treuil (111) apte à régler la longueur du filin (103), permettant un mouvement vertical de la plateforme principale (106) par rapport à la nacelle secondaire (112),
- un instrument d'acquisition d'information (21) porté par la plateforme.

16. Support selon la revendication 15, comprenant en outre :
- une plateforme secondaire (102), et
- une deuxième articulation (101),
la plateforme secondaire (102) étant liée au-dessous de la plateforme principale (106) par la deuxième articulation (101), l'instrument d'acquisition étant suspendu à la plateforme secondaire (102).

17. Support selon la revendication 16, dans lequel la plateforme secondaire (102) comprend en outre un actionneur apte à agir sur l'instrument d'acquisition (104) pour régler une orientation de l'instrument d'acquisition (104) par rapport à la plateforme secondaire (102).

18. Support selon l'une des revendication 1 à 17, dans lequel l'instrument d'acquisition d'information (21) comporte au moins un instrument choisi dans le groupe formé par une caméra vidéo, une caméra thermique, un détecteur de gaz et un capteur de mesure dimensionnelle.

19. Support selon l'une des revendication 1 à 18 dans lequel le corps creux est sphérique ou cylindrique

20. Utilisation d'un support selon l'une des revendications 1 à 19 pour l'examen et/ou l'inspection de l'état des parois d'une enceinte fermée ou d'une cuve.

21. Utilisation selon la revendication 20, **caractérisée en ce que** la cuve examinée et/ou inspectée est une cuve de transport de gaz naturel liquéfié, dont la paroi comporte une membrane métallique primaire.

## Patentansprüche

1. Mobiler Träger für ein Informationsbeschaffungsinstrument (21), wobei der Träger Folgendes umfasst:
- eine Hauptbühne (11), welche einer vertikal steigenden Antriebskraft unterliegt,
- einen Hohlkörper (14),
- flexible mechanische Befestigungen (15), wobei der Hohlkörper (14) mit der Hauptbühne (11) über die flexiblen mechanischen Befestigungen (15) verbunden ist, wobei die vertikal steigende Antriebskraft ein statischer Auftrieb ist, welcher durch den Hohlkörper (14) erzeugt wird, wobei die flexiblen mechanischen Befestigungen (15) durch den statischen Auftrieb gespannt gehalten werden,
- eine Sekundärbühne (12,112), wobei die Sekundärbühne (12, 112) unter der Hauptbühne (11) angeordnet ist,
- eine Vielzahl von flexiblen mechanischen Verbindungen (17), um eine Rückhaltekraft auszuüben, welche den Träger gegenüber der vertikalen Antriebskraft im Gleichgewicht hält, wobei die Längen derflexiblen mechanischen Verbindungen modifizierbar sind, um eine Bewegung des Trägers in einem Arbeitsvolumen zu bewirken, und
- ein Gelenk (13), welches die Hauptbühne (11) mit der Sekundärbühne (12, 112) verbindet,
**dadurch gekennzeichnet, dass** die flexiblen mechanischen Verbindungen (17) mit der Sekundärbühne verbunden sind und die flexiblen mechanischen Befestigungen (15) durch Einwirkung auf die Länge der Befestigungen (15) eine gegenüber der Hauptbühne (11) beschränkte Rotation des Hohlkörpers (14) ermöglichen, wobei das Zentrum der Rotation das Zentrum des Hohlkörpers (14) ist.

2. Träger gemäß Ansprüch 1, **dadurch gekennzeichnet, dass** das Gelenk (13) eine kardanische Aufhängung umfasst, damit die Ausrichtung der Hauptbühne durch die vertikale Antriebskraft konstant gegenüber der vertikalen Richtung gehalten wird.

3. Träger gemäß einem der Ansprüche 1 oder 2, **dadurch gekennzeichnet, dass** das Gelenk zwischen der Hauptbühne (11) und der Sekundärbühne (12) einen Schwenkfreiheitsgrad um eine vertikale Achse aufweist.

4. Träger gemäß Anspruch 3, **dadurch gekennzeichnet, dass** dieser ein Stellglied umfasst, das dazu geeignet ist, eine Schwenkbewegung der Hauptbühne um die vertikale Achse zu bewirken.

5. Träger gemäß einem der Ansprüche 1 bis 4, **dadurch gekennzeichnet, dass** die Rückhaltekraft auf die Sekundärbühne (12) durch mindestens drei flexible mechanische Verbindungen (17) ausgeübt wird, welche jeweils mit einer Referenzebene durch eines ihrer Enden verbunden sind.

6. Träger gemäß Anspruch 5, **dadurch gekennzeichnet, dass** dieser Motoren (18) umfasst, welche in der Referenzebene angeordnet und dazu geeignet sind, die Länge der flexiblen mechanischen Verbindungen (17) einzustellen, um den Träger gegenüber der Referenzebene zu bewegen.

7. Träger gemäß einem der Ansprüche 1 bis 6, **dadurch gekennzeichnet, dass** der Hohlkörper (14) ein Ballon ist, dessen Füllgas Helium ist.

8. Träger gemäß einem der Ansprüche 1 bis 7, **dadurch gekennzeichnet, dass** das Informationsbeschaffungsinstrument (21) an einer Platte (16) montiert ist, welche auf dem Hohlkörper (14) befestigt ist, der mit der Hauptbühne (11) verbunden ist, wobei die Platte (16) durch eine Gegenplatte (19) ausgeglichen wird, welche gegenüber dem Zentrum des Hohlkörpers (14) symmetrisch zur Platte (16) liegt.

9. Träger gemäß einem der Ansprüche 1 bis 8, **dadurch gekennzeichnet, dass** die flexiblen mechanischen Befestigungen (15) durch eines ihrer Enden mit der Wand des Hohlkörpers (14) und durch ihr anderes Ende mit einer Reguliervorrichtung (15a) verbunden sind, welche auf der Hauptbühne (11) angeordnet ist und auf deren Länge einwirkt, um eine Rotation des Hohlkörpers (14) in einem gewünschten Winkel zu bewirken.

10. Träger gemäß Anspruch 9, **dadurch gekennzeichnet, dass** die Reguliervorrichtung (15a) dazu geeignet ist, eine Rotation des Hohlkörpers (14) um einen Winkel zwischen 0° und mindestens 90° in mindestens einer Meridianebene der Kugel zu bewirken.

11. Träger gemäß einem der Ansprüche 1 bis 10, **dadurch gekennzeichnet, dass** die Verbindung zwischen der Hauptbühne (11) und dem Hohlkörper (14) durch mindestens zwei flexible mechanische Befestigungen (15) hergestellt wird, deren Verankerungspunkte (20) am Hohlkörper (14) um 180° voneinander entfernt auf einem selben Kreis des Hohlkörpers (14) angeordnet sind, dessen Ebene von dem Zentrum des Hohlkörpers (14) entfernt ist, wobei der Kreis in einer Referenzposition des Hohlkörpers (14) horizontal gegenüber der Hauptbühne (11) ist.

12. Träger gemäß Anspruch 11, **dadurch gekennzeichnet, dass** jede flexible mechanische Befestigung (15) mit einem Führungselement (25) verbunden ist, wobei die Führungselemente von der Wand des Hohlkörpers (14) getragen werden und auf einem äquatorialen Kreis des Hohlkörpers angeordnet sind, welcher in einer Ebene parallel zu dem Kreis ist, an dem sich die Verankerungspunkte (20) der mindestens zwei flexiblen mechanischen Befestigungen (15) am Hohlkörper (14) befinden.

13. Träger gemäß Anspruch 12, **dadurch gekennzeichnet, dass** jede flexible mechanische Befestigung (15) in der Nähe ihres zugehörigen Führungselementes (25) von einer Ummantelung (28) bedeckt ist, welche die Reibung der Befestigung (15) am Hohlkörper (14) vermeidet.

14. Träger gemäß einem der Ansprüche 12 oder 13, **dadurch gekennzeichnet, dass** jedes Führungselement (25) mindestens einen Dämpfungsanschlag umfasst, um eine Beschädigung des vom Träger inspizierten Elementes beim Drücken oder bei einem Stoß des Hohlkörpers (14) gegen das untersuchte Element zu vermeiden.

15. Träger gemäß einem der Ansprüche 1 bis 14, weiterhin umfassend eine Instrumentierungsbühne, umfassend:
- eine Hauptplattform (106), welche unter der Sekundärbühne (112) durch eine Leine (103) verbunden ist,
- eine Winde (111), welche dazu geeignet ist, die Länge der Leine (103) einzustellen, was eine vertikale Verschiebung der Hauptplattform (106) gegenüber der Sekundärbühne (112) ermöglicht,
- ein Informationsbeschaffungsinstrument (21), welches von der Plattform getragen wird.

16. Träger gemäß Anspruch 15, weiterhin umfassend:
- eine Sekundärplattform (102), und
- ein zweites Gelenk (101),
wobei die Sekundärplattform (102) unter der Hauptplattform (106) über das zweite Gelenk (101) verbunden ist, wobei das Beschaffungsinstrument an der Sekundärplattform (102) aufgehängt ist.

17. Träger gemäß Anspruch 16, wobei die Sekundärplattform (102) weiterhin ein Stellglied umfasst, welches dazu geeignet ist, auf das Beschaffungsinstrument (104) einzuwirken, um eine Ausrichtung des Beschaffungsinstruments (104) gegenüber der Sekundärplattform (102) einzustellen.

18. Träger gemäß einem der Ansprüche 1 bis 17, wobei das Informationsbeschaffungsinstrument (21) mindestens ein Instrument umfasst, ausgewählt aus der Gruppe bestehend aus einer Videokamera, einer Wärmebildkamera, einem Gassensor und einem Sensor zur Dimensionsmessung.

19. Träger gemäß einem der Ansprüche 1 bis 18, wobei der Hohlkörper kugelförmig oder zylindrisch ist.

20. Verwendung eines Trägers gemäß einem der Ansprüche 1 bis 19 für die Untersuchung und/oder inspektion des Zustandes der Wände eines geschlossenen Behälters oder eines Tanks.

21. Verwendung gemäß Anspruch 20, **dadurch gekennzeichnet, dass** der untersuchte und/oder inspizierte Tank ein Tank zum Transport von Flüssigerdgas ist, dessen Wand eine primäre Metallmembran umfasst.

## Claims

1. Mobile support for an information acquisition instrument (21), said support comprising:
- a main cradle (11) which is subjected to a rising vertical motive force,
- a hollow body (14),
- flexible mechanical tethers (15), the hollow body (14) being connected to the main cradle (11) by the flexible mechanical tethers (15), the rising vertical motive force is buoyancy generated by the hollow body (14), the flexible mechanical tethers (15) being kept in a taut state by said buoyancy,
- a secondary cradle (12, 112), the secondary cradle (12, 112) being disposed beneath the main cradle (11),
- a plurality of flexible mechanical links (17) for exerting a retention force that keeps the support balanced with respect to the vertical motive force, the lengths of the flexible mechanical links being modifiable in order to cause the support to move in a working volume, and
- an articulation (13) connecting the main cradle (11) to the secondary cradle (12, 112),
**characterized in that** the flexible mechanical links (17) are connected to the secondary cradle and **in that** the flexible mechanical tethers (15) allow limited rotation of the hollow body (14) with respect to the main cradle (11) by action on the length of said tethers (15), the centre of said rotation being the centre of the hollow body (14).

2. Support according to Claim 1, **characterized in that** the articulation (13) comprises a gimbal in order that the orientation of the main cradle is kept constant with respect to the vertical direction by the vertical motive force.

3. Support according to either of Claims 1 and 2, **characterized in that** the articulation between the main cradle (11) and the secondary cradle (12) has a degree of pivoting freedom about a vertical axis.

4. Support according to Claim 3, **characterized in that** it comprises an actuator able to bring about a pivoting movement of the main cradle about the vertical axis.

5. Support according to one of Claims 1 to 4, **characterized in that** the retention force is exerted on the secondary cradle (12) by at least three flexible mechanical links (17) that are each connected to a reference plane by one of their ends.

6. Support according to Claim 5, **characterized in that** it comprises motors (18) that are located in the reference plane and are able to adjust the length of the flexible mechanical links (17) in order to move the support with respect to the reference plane.

7. Support according to one of Claims 1 to 6, **characterized in that** the hollow body (14) is a balloon, the filling gas of which is helium.

8. Support according to one of Claims 1 to 7, **characterized in that** the information acquisition instrument (21) is loaded onto a plate (16) fixed to the hollow body (14) associated with the main cradle (11), said plate (16) being counterbalanced by a counter-plate (19) symmetrical to the plate (16) with respect to the centre of the hollow body (14).

9. Support according to one of Claims 1 to 8, **characterized in that** the flexible mechanical tethers (15) are secured to the wall of the hollow body (14) by one of their ends and, by their other end, to an adjusting device (15a) that is disposed on the main cradle (11) and acts on the length of said tethers (15) in order to produce a rotation of the hollow body (14) through a desired angle.

10. Support according to Claim 9, **characterized in that** the adjusting device (15a) is able to produce a rotation of the hollow body (14) through an angle of between 0° and at least 90° in at least one meridian plane of the sphere.

11. Support according to one of Claims 1 to 10, **characterized in that** the connection between the main cradle (11) and the hollow body (14) is produced by means of at least two flexible mechanical tethers (15), the attachment points (20) of which to the hollow body (14) are located 180° apart on one and the same circle of the hollow body (14), the plane of which is at a distance from the centre of said hollow body (14), said circle being horizontal in a reference position of the hollow body (14) with respect to the main cradle (11).

12. Support according to Claim 11, **characterized in that** each flexible mechanical tether (15) is associated with a guide element (25), the guide elements being carried on the wall of the hollow body (14) and being disposed on an equatorial circle of said hollow body which is in a plane parallel to the circle in which the attachment points (20) of the at least two flexible mechanical tethers (15) on the hollow body (14) are located.

13. Support according to Claim 12, **characterized in that** each flexible mechanical tether (15), in the vicinity of its associated guide element (25), is covered with a sheath (28) that prevents friction of the tether (15) against the hollow body (14).

14. Support according to either of Claims 12 and 13, **characterized in that** each guide element (25) comprises at least one damping stop in order to prevent the inspected element being damaged by the support in the event of the hollow body (14) pressing against or striking said examined element.

15. Support according to one of Claims 1 to 14, further comprising an instrumentation cradle that includes:
- a main platform (106) connected under the secondary cradle (112) by a cable (103),
- a winch (111) that is able to adjust the length of the cable (103), allowing a vertical movement of the main platform (106) with respect to the secondary cradle (112),
- an information acquisition instrument (21) carried by the platform.

16. Support according to Claim 15, further including:
- a secondary platform (102), and
- a second articulation (101),
the secondary platform (102) being connected to the bottom of the main platform (106) by the second articulation (101), the acquisition instrument being suspended from the secondary platform (102).

17. Support according to Claim 16, in which the secondary platform (102) further includes an actuator that is able to act on the acquisition instrument (104) in order to adjust an orientation of the acquisition instrument (104) with respect to the secondary platform (102).

18. Support according to one of Claims 1 to 17, in which the information acquisition instrument (21) comprises at least one instrument selected from the group formed by a video camera, a thermal imaging camera, a gas detector and a dimensional measurement sensor.

19. Support according to one of Claims 1 to 18, in which the hollow body is spherical or cylindrical.

20. Use of a support according to one of Claims 1 to 19 for examining and/or inspecting the state of the walls of a closed chamber or of a tank.

21. Use according to Claim 20, **characterized in that** the tank examined and/or inspected is a tank for transporting liquefied natural gas, the wall of said tank comprising a primary metallic membrane.
